# EUROPEAN PATENT APPLICATION

(11) **EP 3 845 377 A1**
(43) Date of publication of application: **07.07.2021**
(21) Application number: 19220254.7
(22) Date of filing: 31.12.2019
(51) Int. Cl.: B32B 5/12, B29C 45/14, B29C 70/20, B32B 3/08, B32B 5/02, B32B 5/26, H05K 5/00

(54) **WARPAGE-RESISTANT LAMINATES AND PORTABLE ELECTRONIC DEVICE HOUSINGS INCLUDING THE SAME**

(71) Applicant: SHPP Global Technologies B.V., 4612 PX Bergen op Zoom (NL)
(72) Inventor: KASHIF, Syed Muhammad, 4612 PX Bergen op Zoom (NL)
(74) Representative: J A Kemp LLP

(57) **Abstract**

Disclosed are portable electronic device housings, some of which include a laminate and a thermoplastic body coupled to the laminate, the body covering more of the laminate's back face than the laminate's front face, where the laminate includes an inner section having one or more laminae, fibers of each of which are aligned with the length of the laminate, and first and second outer sections disposed on opposing sides of the inner section, each including: one or more laminae having fibers aligned with the width of the laminate, one or more laminae having fibers aligned in a first direction that is angularly disposed relative to the width by a first angle, and one or more laminae having fibers aligned in a second direction that is angularly disposed relative to the width by a second angle that is equal and opposite to the first angle.

## Description

### FIELD OF INVENTION

The present invention relates generally to fiber-reinforced composites, and more specifically, to thin, high-stiffness laminates that may be suitable for use in a variety of applications, including portable electronic device (e.g., laptop) housings.

### BACKGROUND

Fiber-reinforced composites can be used to form structures having advantageous structural characteristics, such as high stiffnesses and high strengths, as well as relatively low weights, when compared to similar structures formed from conventional materials. As a result, fiber-reinforced composites are used in a variety of applications across a range of industries, including the automotive, aerospace, and consumer electronics industries.

In many applications, the use of fiber-reinforced composites to increase the stiffness of a structure can be limited by the size and/or weight requirements of the structure. For instance, many fiber-reinforced composites may be unable to strike a correct balance between stiffness and thickness in order to provide, for example, adequate protection while being relatively small (e.g., thin-walled) and light.

Adding to these complications, using certain manufacturing techniques, such as injection overmolding, to form a component using a fiber-reinforced composite can cause the composite to warp, particularly if it is thin, and even if it is relatively stiff.

### SUMMARY

Ones of the present laminates are configured to provide sufficient stiffness at a desired thickness (e.g., a thickness that is less than or equal to 1.5 millimeters (mm) or less than or equal to 2.0 mm), while being resistant to warpage when combined with a thermoplastic material to form a component. For example, ones of the present laminates include an inner section having one or more laminae, fibers of each of which are aligned with the length of the laminate, and first and second outer sections disposed on opposing sides of the inner section, each including: one or more laminae having fibers aligned with the width of the laminate, one or more laminae having fibers aligned in a first direction that is angularly disposed relative to the width of the laminate by a first angle, and one or more laminae having fibers aligned in a second direction that is angularly disposed relative to the width of the laminate by a second angle that is equal and opposite to the first angle. At least via its lay-up, when such a laminate is combined with a thermoplastic material to form a component in which the thermoplastic material covers more of the back face of the laminate than the front face of the laminate, the laminate may be resistant to warpage.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed embodiment, the terms "substantially" and "approximately" may be substituted with "within [a percentage] of' what is specified, where the percentage includes .1, 1, 5, and 10 percent.

The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or.

Further, a device or system that is configured in a certain way is configured in at least that way, but it can also be configured in other ways than those specifically described.

The terms "comprise" (and any form of comprise, such as "comprises" and "comprising"), "have" (and any form of have, such as "has" and "having"), and "include" (and any form of include, such as "includes" and "including") are open-ended linking verbs. As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any embodiment of any of the apparatuses, systems, and methods can consist of or consist essentially of - rather than comprise/have/include - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb.

The feature or features of one embodiment may be applied to other embodiments, even though not described or illustrated, unless expressly prohibited by this disclosure or the nature of the embodiments.

Some details associated with the embodiments are described above and others are described below.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers.
**FIG. 1A** is a schematic top view of a first embodiment of the present laminates.
**FIG. 1B** is a schematic cross-sectional side view of the laminate of FIG. 1A, taken along line 1B-1B of FIG. 1A.
**FIG. 1C** is a schematic cross-sectional end view of the laminate of FIG. 1A, taken along line 1C-1C of FIG. 1A.
**FIG. ID** is a schematic exploded view of the laminate of FIG. 1A.
**FIG. IE** is a schematic sectional perspective view of the laminate of FIG. 1A.
**FIG. IF** is a schematic top view of one of the laminae of the laminate of FIG. 1A.
**FIG. 2A** is a schematic bottom view of one embodiment of the present portable electronic device housings that includes one of the present laminates.
**FIG. 2B** is a schematic cross-sectional side view the housing of FIG. 2A, taken along line 2B-2B of FIG. 2A.
**FIG. 2C** is a schematic cross-sectional end view the housing of FIG. 2A, taken along line 2C-2C of FIG. 2A.
**FIG. 3** is a schematic perspective view of one embodiment of the present laptop housings that includes one or more of the present laminates.
**FIG. 4A** is a schematic bottom view of the A cover of the laptop housing of FIG. 3.
**FIG. 4B** is a schematic cross-sectional side view of the A cover of FIG. 4A, taken along line 4B-4B of FIG. 4A.
**FIGs. 5A** and **5B** depict warpage simulations of a reference laminate at a first temperature and a second temperature, respectively, after an overmolding process.
**FIGs. 6A** and **6B** depict warpage simulations of an embodiment of the present laminates at a first temperature and a second temperature, respectively, after an overmolding process.

### DETAILED DESCRIPTION

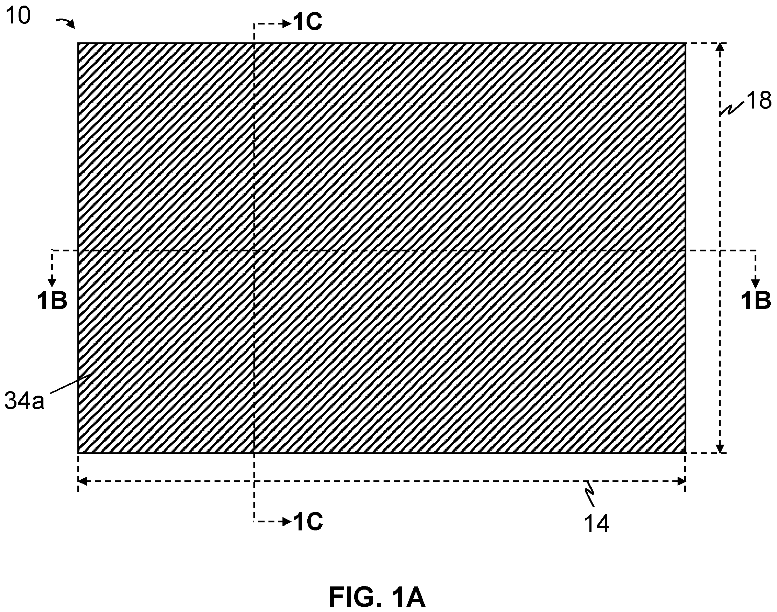

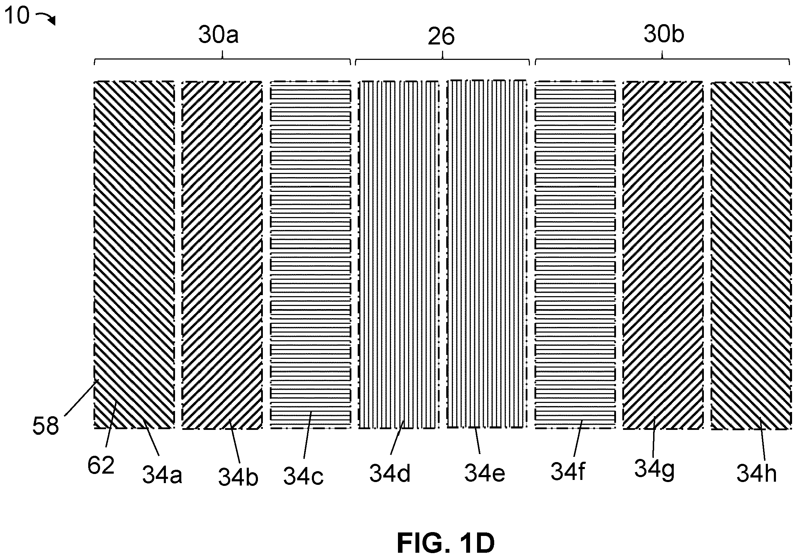

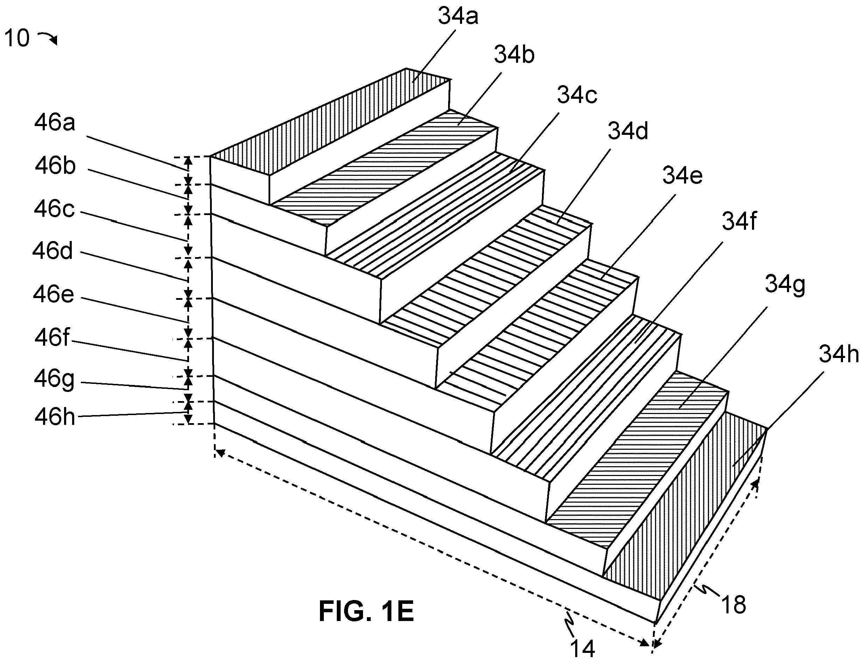

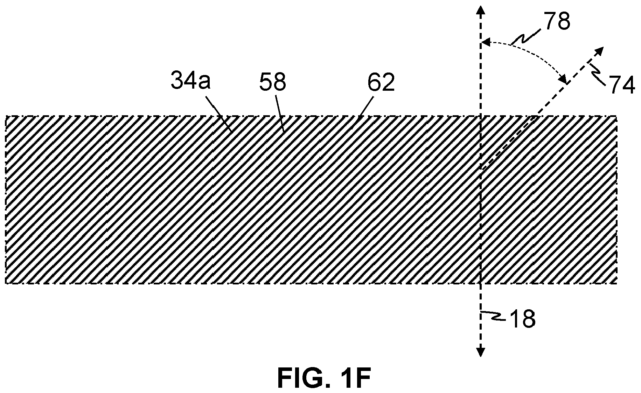

The present laminates can be used in a variety of applications in which a thin, high-stiffness laminate is desirable, including, for example, in the production of vehicle components, aircraft components, consumer electronics components, and/or the like. Provided by way of example, FIGs. 1A-1E depict one embodiment 10 of the present laminates that is configured for use in a portable electronic device housing such as, for example, a laptop, mobile phone, digital assistant, pager, tablet, media player, handheld gaming device, camera, watch, navigation device, and/or the like housing.

The present laminates can be dimensioned and shaped according to their respective applications. For example, laminate 10 includes a length 14 and a width 18 that is perpendicular to and smaller than the length. Length 14 and width 18 are each a distance measured between outer edges of the laminate along a straight line; the length can be, but need not be, the largest such distance. Length 14 can be greater than or substantially equal to any one of, or between any two of: 25, 26, 27, 28, 29, 30, 31, 32, 33, 34, or 35 centimeters (cm) (e.g., approximately 33.5 cm) and/or greater than or substantially equal to any one of, or between any two of: 1.10, 1.15, 1.20 1.25, 1.30, 1.35, 1.40, 1.45, 1.50, 1.55, 1.60, 1.65, 1.70, 1.75, or 1.80 times width 18 (e.g., between approximately 1.3 and approximately 1.7 times the width or approximately 1.45 times the width). Width 18 can be greater than or substantially equal to any one of, or between any two of: 14, 15, 16, 17, 18, 19, 20, 21, 22, 23, 24, 25, 26, 27, 28, 29, or 30 cm (e.g., approximately 23 cm). Laminate 10 is rectangular; however, other embodiments of the present laminates can be triangular, square, or otherwise polygonal (whether having sharp and/or rounded corners), circular, elliptical, or otherwise rounded, or can have an irregular shape. Some embodiments of the present laminates can include one or more openings, notches, and/or the like, which can facilitate incorporation of the laminate into a structure. To illustrate, in embodiments of the present laminates for use in a housing of a portable electronic device, such opening(s), notch(es), and/or the like can allow for mounting and/or operation of other component(s) (e.g., button(s), other user-input device(s), camera(s), and/or the like) of the portable electronic device.

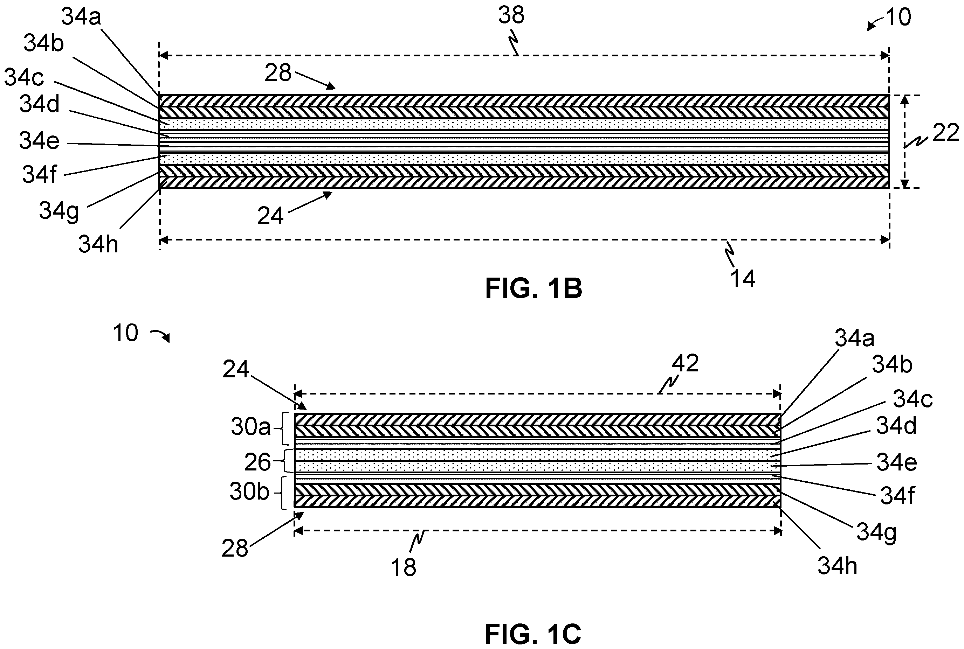

As shown, laminate 10 has a thickness 22 (FIG. 1B) that is measured from a front surface 24 to a back surface 28 of the laminate along a straight line. In the depicted embodiment, thickness 22 is oriented perpendicularly to both length 14 and width 18. Thickness 22 can be less than or substantially equal to any one of, or between any two of: 0.5, 0.6, 0.7, 0.8, 0.9, 1.0, 1.1, 1.2, 1.3, 1.4, 1.5, 1.6, 1.7, 1.8, 1.9, or 2.0 millimeters (mm) (e.g., approximately 0.9 mm). For laminate 10, thickness 22 is substantially uniform throughout the laminate; however, other embodiments of the present laminates can have a varying thickness. As described below, embodiments of the present laminates, at least via selection of their respective laminae, can have relatively high resistances to deflection at such relatively low thicknesses.

The present laminates each include laminae (e.g., 34a-34h) that have been consolidated (e.g., using heat and/or pressure). Laminate 10 includes eight laminae 34a-34h; however, other embodiments of the present laminates can include any suitable number of laminae (e.g., 2, 3, 4, 5, 6, 7, 8, 9, 10, 11, 12, 13, 14, 15, or more laminae).

Each of laminae 34a-34h has a length 38 and a width 42 that is perpendicular to and smaller than the length, where the length and the width are each a distance between outer edges of the lamina measured along a straight line (labeled for lamina 34a in FIGs. 1B and 1C). Length 38 can be, but need not be, the largest such distance. Each of the laminae may have a shape and dimensions that correspond to the shape and dimensions of laminate 10. To illustrate, for at least one of the laminae, length 38 is aligned with and substantially equal to length 14 of laminate 10, and width 42 is aligned with and substantially equal to width 18 of the laminate. As used herein, "aligned with" means within 10 degrees of parallel to. To further illustrate, the largest face of each of the laminae has a surface area that is substantially equal to a surface area of the front surface 24 and/or back surface 28 of laminate 10. To yet further illustrate, each of the laminae is rectangular. In other embodiments, one or more laminae of a laminate can have a shape and/or dimensions that differ from the shape and/or dimensions of the laminate; such lamina(e) can, for example, be used to add stiffness and strength to a portion of the laminate that is smaller than the entirety of the laminate.

Each of laminae 34a-34h includes fibers 58 dispersed within a matrix material 62. Fibers (e.g., 58) of the present laminates (e.g., 10) can include any suitable fibers, such as, for example, carbon fibers, glass fibers, aramid fibers, polyethylene fibers, polyester fibers, polyamide fibers, ceramic fibers, basalt fibers, steel fibers, and/or the like. Matrix materials (e.g., 62) of the present laminates (e.g., 10) can include thermoplastic and/or thermoset materials. For example, a suitable thermoplastic material can include polyethylene terephthalate, polycarbonate (PC), polybutylene terephthalate (PBT), poly(1,4-cyclohexylidene cyclohexane-1,4-dicarboxylate) (PCCD), glycol-modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polystyrene sulfonate (PSS), polyether ether ketone (PEEK), polyether ketone (PEKK), acrylonitrile butyldiene styrene (ABS), polyphenylene sulfide (PPS), a copolymer thereof, or a blend thereof. For further example, a suitable thermoset material can include an unsaturated polyester resin, a polyurethane, bakelite, duroplast, urea-formaldehyde, diallyl-phthalate, epoxy resin, an epoxy vinylester, a polyimide, a cyanate ester of a polycyanurate, dicyclopentadiene, a phenolic, a benzoxazine, a co-polymer thereof, or a blend thereof. Laminae (e.g., 34a-34h) including fibers (e.g., 58) can have a pre- and/or post-consolidation fiber volume fraction that is greater than or substantially equal to any one of, or between any two of: 40, 45, 50, 55, 60, 65, 70, 75, 80, 85, or 90%. In some embodiments of the present laminates, one or more laminae may not include fibers (e.g., 58); such lamina(e) can, for example, comprise a sheet of a matrix material (e.g., 62).

Embodiments of the present laminates can achieve relatively high resistances to deflection at least via selection of their respective laminae and appropriate layering thereof. In laminate 10, each of laminae 34a-34h is a unidirectional lamina, or a lamina having fibers 58, substantially all of which are aligned in a single direction (hereinafter, a "fiber direction"). Laminate 10 has an inner section 26 and first and second outer sections, 30a and 30b, disposed on opposing sides of the inner section. One of the laminae of first outer section 30a may correspond to (e.g., define at least a majority of) back surface 28. And one of the laminae of second outer section 30b may correspond to (e.g., define at least a majority of) front surface 24.

In each of outer sections 30a's and 30b's laminae, fibers 58 are aligned in a respective fiber direction 74 (shown for laminae 34a in FIG. IF) that is angularly disposed at an angle 78 of at least 10 degrees relative to width 18 of the laminate (e.g., laminae 34a-34b and 34g-34h, each of which may be characterized as an off-axis lamina), or is aligned with the width of the laminate (e.g., laminae 34c and 34f, each of which may be characterized as a 90-degree lamina). To illustrate, a smallest angle 78 between an off-axis laminae's fiber direction 74 and width 18 of the laminate can be greater than or substantially equal to any one of, or between any two of: 10, 15, 20, 25, 30, 35, 40, 45, 50, 55, 60, 65, 70, 75, and 80 degrees (e.g., 45 degrees). Providing off-axis and 90-degree laminae within outer sections 30a and 30b, rather than within inner section 26, may result in better resistance to deflection.

In some embodiments, each of outer sections 30a, 30b includes two or more laminae (three or more laminae, if each is unidirectional), including at least one laminae having fibers 58 aligned with width 18 of the laminate (e.g., 90-degree laminae 34c, 34f), at least one laminae having fibers 58 aligned in a first fiber direction 74 that is angularly disposed relative to the width of the laminate by a first angle 78 (e.g., first off-axis laminae 34a, 34h), and at least one laminae having fibers 58 aligned in a second fiber direction 74 that is angularly disposed relative to the width of the laminate by a second angle 78 (e.g., second off-axis laminae 34b, 34g). In each of outer sections 30a and 30b, fiber direction 74 of one of the one or more first off-axis laminae (e.g., 34a or 34h) can be angularly disposed relative to width 18 of the laminate by an angle 78 that is equal and opposite to the angle 78 at which fiber direction 74 of one of the one or more second off-axis laminae (e.g., 34b or 34g) is angularly disposed relative to the width of the laminate.

In some embodiments, one or more of the laminae may each include fibers aligned in multiple fiber directions (e.g., woven lamina(e)); for example, the lamina can include fibers aligned in a first fiber direction and fibers aligned in a second fiber direction that is angularly disposed relative to the first fiber direction.

Each of the one or more first off-axis lamina (e.g., 34a, 34h), one or more second off-axis lamina (e.g., 34b, 34g), and one or more 90-degree laminae (e.g., 34c, 34f) may be arranged in a suitable manner based on the application of the laminate. For example, in at least one outer section 30a, 30b, an off-axis lamina (34a, 34b, 34g, or 34h) is positioned closer to a face (front surface 24 or back surface 28) of laminate 10 than is a 90-degree lamina (34c or 34f). In the embodiment shown, the front and back surfaces of the laminate, 24 and 28, are each defined-at least in part, and including wholly-by an off-axis lamina (34a, 34b, 34g, or 34h).

Inner section 26 includes laminae 34d-34e, and first and second outer sections 30a and 30b include laminae 34a-34c and 34f-34h, respectively. In each of inner section 26's laminae, fibers 58 are aligned with length 14 of laminate 10 (e.g., laminae 34d and 34e, each of which may be characterized as a 0-degree lamina). Although inner section 26 is shown as including two separate laminae, an inner section can include a single lamina having fibers aligned with the length of its respective laminate. In the embodiments shown, 0-degree laminae (e.g., 34c, 34d) are confined within inner section 26. To illustrate, each of the laminae of outer sections 30, 30b that accounts for at least 10% of the laminate's thickness 22 does not include fibers 58 that are aligned with length 14 of the laminate. In some embodiments, no lamina outside of inner section 26 includes fibers 58 aligned with length 14 of the laminate. In one or more of these ways, laminate 10 may provide sufficient stiffness (e.g., bending stiffness) while mitigating warpage during a high temperature, high pressure (e.g., injection overmolding) process.

By way of illustration, laminae 34a and 34h can each have a fiber direction that is angularly disposed at an angle measured counterclockwise from length 14 of 45 degrees (e.g., each of which may be characterized as a -45-degree lamina), and laminae 34b and 34g can each have a fiber direction that is angularly disposed at an angle measured clockwise from the length of 45 degrees (e.g., each of which may be characterized as a 45-degree laminae). And, in each of outer sections 30a and 30b, the 90-degree laminae (34c and 34f, respectively) can be positioned to contact inner section 26. In this configuration, laminate 10 can be arranged in a -45, +45, 90, 0, 0, 90, +45, -45 layup.

While laminate 10 comprises laminae arranged in the above-described symmetric lay-up, other embodiments of the present laminates can have laminae arranged in any suitable lay-up, whether symmetric or asymmetric. Similarly, while laminate 10 is balanced, other embodiments of the present laminates can be unbalanced. Different lay-ups can be achieved by varying the number of laminae in the inner section (e.g., 26) and/or outer sections (e.g., 30a and 30b). And the inner and outer sections can each have the same or a different number of laminae. Further, different lay-ups can be achieved by varying the order in which laminae are layered. For example, the outer sections (e.g., 30a, 30b) may include one or more off-axis laminae and/or one or more 90-degree laminae layered in any suitable order.

In laminate 10, each of laminae 34a-34h can have a pre- and/or post-consolidation thickness (e.g., 46a-46h, respectively) that is between approximately 0.08 mm and approximately 0.16 mm (FIG. IE). In other embodiments, laminae can each include any suitable thickness, such as, for example, a pre- and/or post-consolidation thickness that is greater than or substantially equal to any one of, or between any two of: 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.30, 0.35, 0.40, 0.45, or 0.50 mm. The thicknesses of the laminae need not be the same. For example, at least one of the lamina(e) of the inner section can have a thickness (e.g., at least one of 46d-46e) that is at least 10%, 20%, 30%, 40%, 50%, 60%, 70%, or 90% larger than the thickness of at least one of the lamina(e) of the outer sections (e.g., at least one of 46a-46c and 46f-46h) and/or of at least another one of the lamina(e) of the inner section.

A desired resistance to deflection can be achieved while maintaining a small laminate thickness (e.g., 22) at least by selecting, for each of the laminae, an appropriate lamina thickness based on the dimensions of the laminate. Lamina(e) (e.g., 34c and 34f) having fibers aligned with the width (e.g., 18) of the laminate, which is shorter than the length (e.g., 14), can be relatively thicker. Lamina(e) (e.g., 34d and 34e) having fibers aligned with the length of the laminate can be relatively thinner. And off-axis lamina(e) (e.g., 34-34b and 34g-34h), which may provide resistance to shear deformation, can also be relatively thinner. Such relative sizing may permit some of the present laminates to be thinner than a laminate that, while otherwise similar, and while having substantially the same resistance to deflections, comprises laminae having the same thickness.

Laminate 10 is provided by way of example, and not by way of limitation. In some embodiments of the present laminates, the inner section and/or at least one of the outer sections can have one or more laminae, each having fibers that define a woven structure (e.g., as in a lamina having a plane, twill, satin, basket, leno, mock leno, or the like weave). For example, each outer section 30a, 30b may include at least one woven laminae having first fibers (e.g., 58) aligned with a first direction and second fibers (e.g., 58) aligned with a second direction, the first fibers being woven with the second fibers (e.g., +/- 45 woven lamina(e)). In some such embodiments, the at least one woven laminae may replace one or more unidirectional off-axis laminae (e.g., 34-34b and 34g-34h).

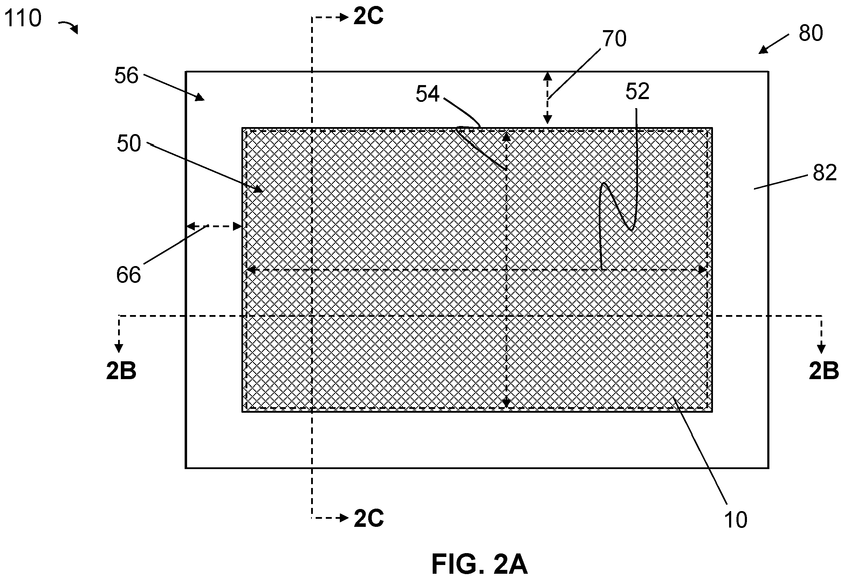

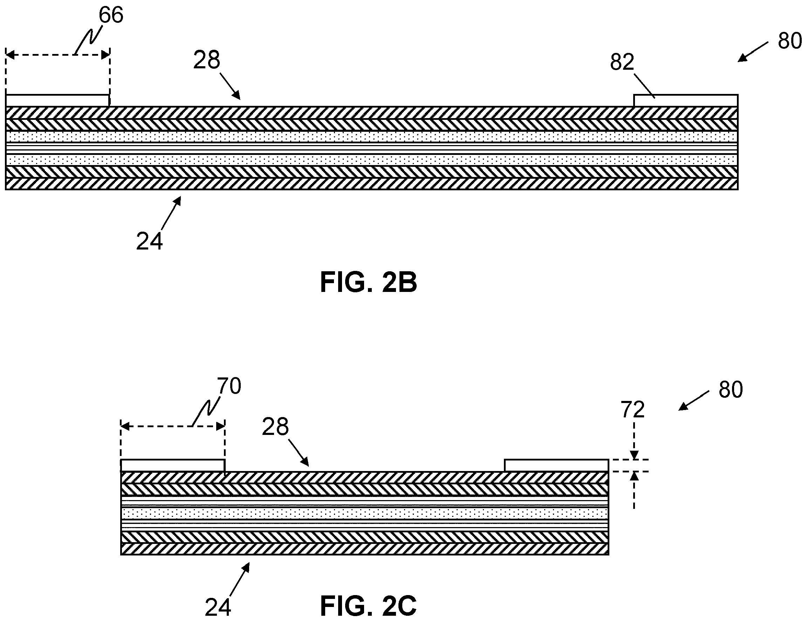

In some embodiments, the present laminates (e.g., 10) may be included in a portable electronic device housing such as, for example, a mobile phone, digital assistant, pager, tablet, media player, handheld gaming device, camera, watch, navigation device, and/or the like housing. To illustrate, as shown in FIGS. 2A-2C, a schematic top view of one embodiment 110 of the present housings is shown. Housing 110 includes a composite body 80. Body 80 can be characterized as "composite" in that the body includes a plastic material 82 and a laminate (e.g., 10), where the plastic material and the laminate are combined to form a unitary structure. As one non-limiting example, composite body 80 can be formed by overmolding plastic material 82 onto laminate 10; in some embodiments, the laminate can be glued, welded, and/or the like to the plastic material. Plastic material 82 can include dispersed elements, such as, for example, discontinuous or short fibers (e.g., of any type described above), which can account for 10 to 70% of the plastic material by weight. In some embodiments, a plastic material (e.g., 82) can include the same material as a matrix material (e.g., 62) of the laminate, which can facilitate a bond between the plastic material and the laminate.

In the embodiment shown, plastic material 82 is coupled to laminate 10 along a periphery of back surface 28 of the laminate such that, for example, the plastic material extends to the edges of the laminate. To illustrate, plastic material 82 can be disposed within the bounds of a border portion 56 that extends from the perimeter of a center portion 50 to the perimeter of the laminate. Plastic material 82 may, but need not, span substantially all of an area defined by border portion 56. In some such embodiments, plastic material 82 does not overlie the portions of laminate 10 that are disposed within the bounds of center portion 50.

Center portion 50 can have a length 52 that is aligned with length 14 of laminate 10 and is at least 10% smaller, for example at least 10%, 20%, 30%, 40%, 50%, 60%, 70%, 80%, or 90% smaller, than length 14. Center portion 50 can also have a width 54 that is aligned with width 18 of laminate 10 and is at least 10% smaller, for example at least 10%, 20%, 30%, 40%, 50%, 60%, 70%, 80%, or 90% smaller, than width 18. Border portion 56 (e.g., plastic material 82) can have a first width 66 and a second width 70 measured parallel to length 14 and width 18, respectively. For example, first width 66 and second width 70 may be greater than or substantially equal to any one of, or between any two of: 2, 4, 6, 8, 10, 12, 14, 16, 18, 20, 25, or 30 mm (e.g., the first and second are approximately equal to 10 mm).

In the depicted embodiment, plastic material 82 is disposed primarily on only one side (e.g., back surface 28) of laminate 10. Plastic material 82 can, for example, cover an area of back surface 28 that is greater than any one of, or between any two of: 2, 4, 6, 10, 15, and 20% of the total area of the back surface. In the depicted embodiment, plastic material 82 is disposed only on back surface 28; however, plastic material 82 may cover a portion (up to and including all) of edge of laminate 10. In some embodiments, some of the plastic material may cover a portion (e.g., less than 5% of the surface area) of front surface 24. In such embodiments, plastic material 82 covers a greater area of back surface 28 than of front surface 24. Specifically, if plastic material 82 covers an area of the front surface, the area of the back surface covered by the plastic material is at least 2 times more than the area of the front surface covered by the plastic material, such as, for example 2, 3, 4, 5, 6, 7, 8, 9, 10, 12, 15, 18, or 20 times greater.

Plastic material 82 may extend upward from back surface 28 to form one or more features of housing 110 (e.g., a sidewall, a lip, and/or the like). For example, plastic material 82 may have a thickness 72 measured perpendicularly to length and width (e.g., from back surface 28 of laminate 10 to a top surface of plastic material along a straight line). Thickness 72 can be less than or substantially equal to any one of, or between any two of: 0.5, 0.6, 0.7, 0.8, 0.9, 1.0, 1.1, 1.2, 1.3, 1.4, 1.5, 1.6, 1.7, 1.8, 1.9, or 2.0 millimeters (mm) (e.g., approximately 0.6 mm).

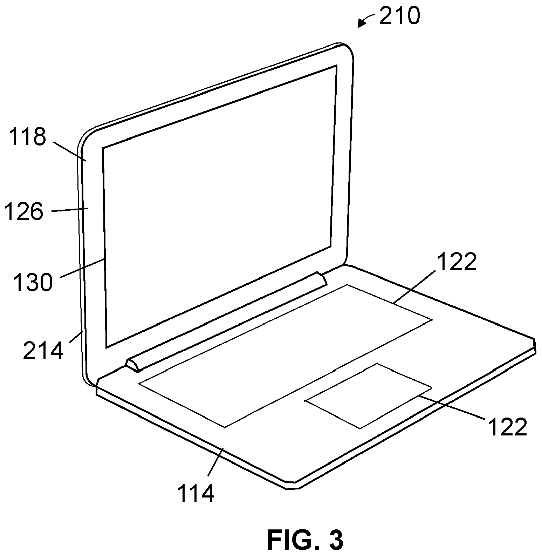

Referring additionally to FIG. 3, shown is a schematic perspective view of one embodiment 210 of the present housings for a laptop. Laptop housing 210 includes a base 114 and a lid 118 that can be movably (e.g., hingedly, in this embodiment) coupled to the base. Each of base 114 and lid 118 can be characterized as a thin-walled (e.g., on the order of mm) shell configured to receive laptop components. For example, laptop components receivable by base 114 can include a processor, motherboard, power supply, user-input device(s) (e.g., a keyboard, touchpad, and/or the like), cooling fan(s), and/or the like. To facilitate operation of such laptop components once they are received by base 114, the base can define one or more openings 122 in communication with its interior (e.g., to allow user access to the user-input device(s), permit airflow to and/or from the cooling fan(s), allow external device(s) to be connected to the motherboard, and/or the like). Base 114 can comprise an assembly of two or more portions (e.g., an upper portion and a lower portion), to, for example, facilitate receipt of such laptop components by the base (e.g., during assembly of a laptop including the base).

Laptop components receivable by lid 118 can include a screen, user-input device(s) (e.g., a camera, microphone, and/or the like), and/or the like. For example, lid 118 can include a frame 126 defining an opening 130, where a laptop screen can be coupled to the frame such that the screen is viewable by a user through the opening. To increase the stiffness and strength of lid 118, facilitate receipt of a laptop screen by the lid, and/or for aesthetic purposes, the lid can include an A cover 214 (described in more detail below) configured to be coupled to frame 126. A cover 214 can be coupled to frame 126 in any suitable fashion, such as, for example, via interlocking features of the A cover and the frame (e.g., such as snap-fit connection(s)), fastener(s), adhesive, welding, and/or the like. In some embodiments, an A cover (e.g., 214) of a lid (e.g., 118) can be unitary with a frame (e.g., 126) of the lid.

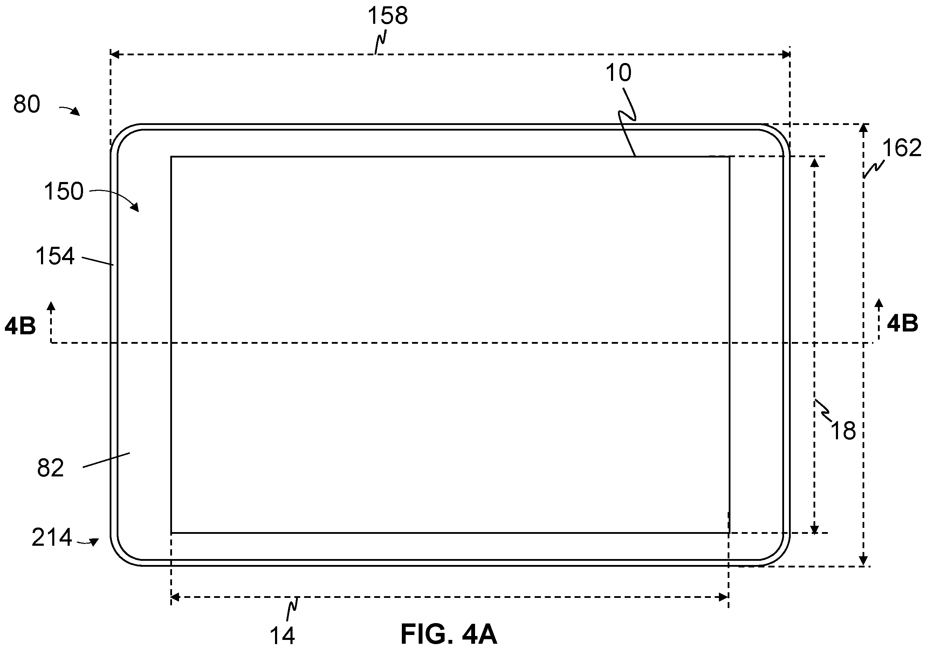

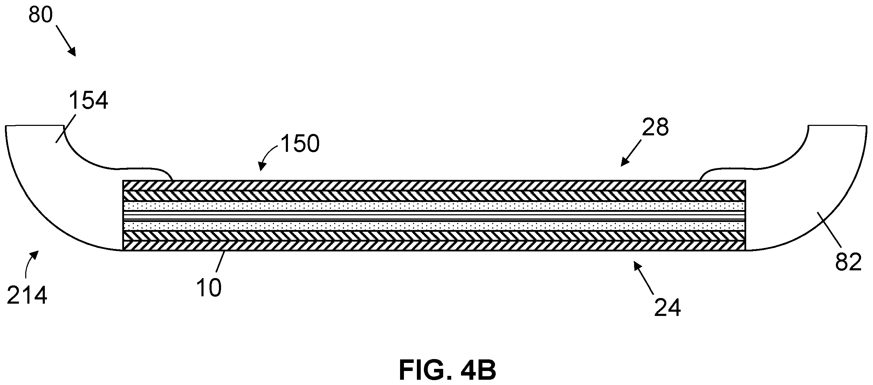

To further illustrate, and referring additionally to FIGs. 4A and 4B, shown are bottom and cross-sectional end views of A cover 214. A cover 214 includes a planar portion 150 and a lip 154 that extends outwardly from and surrounds at least a majority of the planar portion. A cover 214 has a length 158 and a width 162 that is perpendicular to and smaller than the length. Length 158 and width 162 are each a distance measured between outer edges of A cover 214 along a straight line. More particularly, length 158 can be measured along a line that bisects A cover 214, is perpendicular to the outer edges of the A cover through which it extends, and/or the like. In this embodiment, A cover 214 is rectangular, having rounded corners; however, in other embodiments, A cover can be triangular, rectangular, square, or otherwise polygonal (whether having sharp and/or rounded corners), circular, elliptical, or otherwise rounded, or can have an irregular shape.

It is desirable for a laptop housing (e.g., 210) to be sufficiently stiff to protect components received by the laptop housing against damage as well as to be relatively small (e.g., thin-walled), light, and inexpensive. Some embodiments of the present laptop housings (e.g., 210) can achieve such advantageous characteristics while reducing the risk of warpage that may occur during the manufacture of such housings by including embodiment(s) of the present laminates (e.g., 10). For example, in some of the present laptop housings (e.g., 210), laminate(s) (e.g., 10) can be disposed within, on, and/or can form at least a portion of (e.g., a majority of) a wall of the laptop housing (e.g., a wall of a base 114 and/or a wall of a lid 118).

A cover 214 can include a composite body 80 that includes plastic material 82 and a laminate (e.g., 10), where the plastic material and the laminate are combined to form a unitary structure. As one non-limiting example, composite body 80 can be formed by overmolding plastic material 82 onto a perimeter of a face (e.g., back surface 28) of the laminate. In this embodiment, a laminate (e.g., 10) can be positioned within composite body 80 such that a length (e.g., 14) of the laminate can be aligned with length 158 of A cover 214. To illustrate, fibers 58 of 0-degree laminae 34d and 34e of laminate 10 can be aligned with length 158 of A cover 214, and fibers of 90-degree unidirectional laminae 34c and 34f can be aligned with width 162 of the A cover. The length (e.g., 14) of the laminate can be at least 50% (up to and including 100%) of length 158 of A cover 214 (e.g., at least 50, 55, 60, 65, 70, 75, 80, 85, 90, or 95% of the length of the A cover). The width (e.g., 18) of the laminate can be at least 50% (up to and including 100%) of width 162 of A cover 214 (e.g., at least 50, 55, 60, 65, 70, 75, 80, 85, 90, or 95% of the width of the A cover).

In the embodiment shown, plastic material 82 covers a greater area of back surface 28 than of front surface 24 of laminate 10 (e.g., at least 2 times greater). Outer surface(s) of A cover 214 can be defined by plastic material 82 and/or the laminate. In some embodiments, laminate 10 defines planar portion 150 and plastic material 82 extends upward from back surface 28 of laminate 10 to define lip 154 of A cover 214. During formation of A cover 214, warpage may occur as the thinness of the laminate may make it susceptible to deformation during high temperature and high pressure processes (e.g., injection overmolding). And this may be exacerbated by plastic material 82's greater coverage of back surface 28 than front surface 24. Laminate 10 may be structured (e.g., outer sections 30a, 30b including one or more of 90-degree laminae and/or off-axis laminae) to inhibit A cover 214 from warping during the formation of the A cover.

Some embodiments of the present methods comprise producing a portable device housing (e.g., 110, 210) at least by molding a thermoplastic material (e.g., 82) onto a laminate (e.g., 10), the molding performed such that the thermoplastic material covers more of the back face (e.g., 28) of the laminate than the front face (e.g., 24). Some methods include forming the laminate (e.g., 10) at least by layering two or more laminae (e.g., including one or more of any lamina described above) to define a stack. Layering can be performed such that the stack includes an inner section (e.g., 26) and first and second outer sections (e.g., 30a and 30b) disposed on opposing sides of the inner section.

In some methods, producing the laminate comprises applying heat and/or pressure to the stacked laminae (e.g., using a press). In some methods, producing the laminate comprises trimming at least one of the laminae, which can be performed before, during, and/or after stacking the laminae and/or before and/or after applying heat and/or pressure to the stacked laminae. Some methods comprise producing a laptop A cover (e.g., 214) by overmolding a plastic material (e.g., 82) onto the laminate. For example, the laminate can be placed into a mold, and the plastic material can be injected into the mold, thereby overmolding the plastic material onto the laminate.

### EXAMPLES

The present invention will be described in greater detail by way of specific examples. The following examples are offered for illustrative purposes only and are not intended to limit the invention in any manner. Those of skill in the art will readily recognize a variety of noncritical parameters that can be changed or modified to yield essentially the same results.

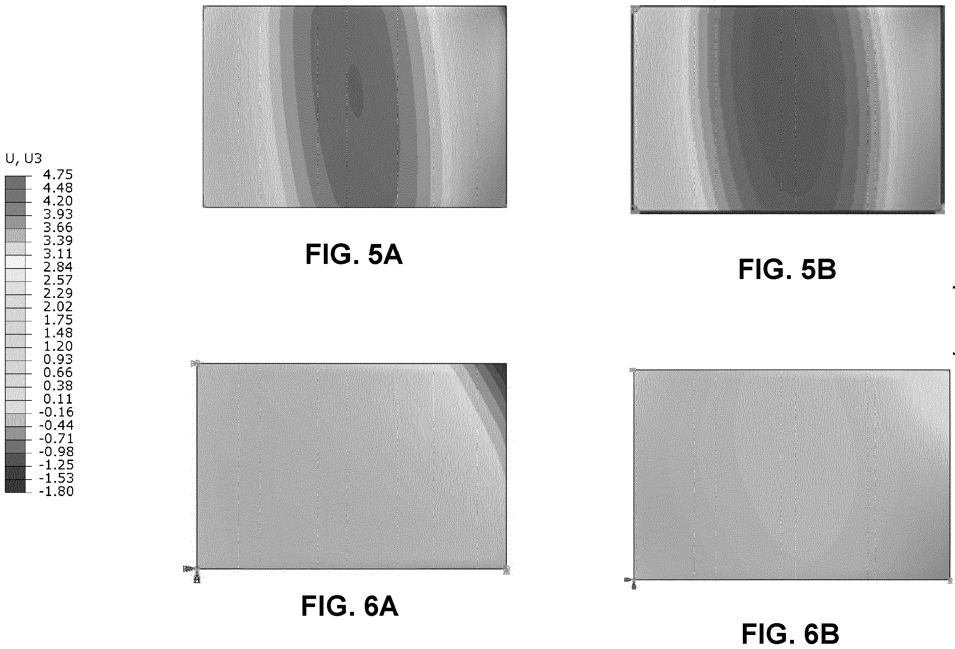

Referring now to FIGs. 5A-6B, warpage of each of two laminates-a reference laminae, FIGs. 5A and 5B, and laminate 10, FIGs. 6A and 6B-caused by overmolding of a thermoplastic material (e.g., 82) onto the laminate was simulated The reference laminate had a 90-0-90 layup, and each of laminate 10's and the reference laminate's laminae included carbon fibers dispersed within a polycarbonate matrix material with a fiber volume fraction of 50%. For each of the laminates, the thermoplastic material was overmolded onto a periphery of the back face of the laminate such that the thermoplastic material extended over the back face by a distance of 10 mm from the laminate's perimeter and had a thickness of 0.6 mm.

For each of the laminates, the warpage simulations were performed twice, once for the laminate at 110° C (FIGs. 5A and 6A), and once for the laminate at 25° C (FIGs. 5B and 6B). At 110° C, laminate 10 exhibited significantly less warpage the reference laminate: the former showed a maximum displacement of approximately 2.5 mm, while the latter showed a maximum displacement of approximately 4 mm. Similarly, at 25° C FIGs. 5B and 6B laminate 10 showed less warpage than the reference laminate.

Some of the present portable electronic device housings comprise: a composite body including a laminate comprising laminae, each including fibers dispersed within a matrix material, the laminate defining a front face and a back face, and a thermoplastic body coupled to the laminate along a periphery of the back face, the thermoplastic body covering more of the back face than the front face, wherein the laminate comprises an inner section including one or more of the laminae, fibers of each of which are aligned with the length of the laminate, the length of the laminate being perpendicular to and at least 10% longer than a width of the laminate, and first and second outer sections disposed on opposing sides of the inner section, each of the outer sections including two or more of the laminate: (1) one or more of which includes fibers aligned with the width of the laminate; (2) one or more of which includes fibers aligned in a first direction that is angularly disposed relative to the width of the laminate by a first angle of at least 10 degrees; and (3) one or more of which includes fibers aligned in a second direction that is angularly disposed relative to the width of the laminate by a second angle that is equal and opposite to the first angle. In some portable electronic device housings, in each of the outer sections, the first angle is approximately 45 degrees.

In some portable electronic device housings, the laminate defines a planar portion of the composite body, and the thermoplastic body defines a lip that extends outwardly from and surrounds at least a majority of the planar portion. In some portable electronic device housings, the thermoplastic body covers less than 5% of the front face of the laminate.

In some portable electronic device housings, the laminate has a thickness that is perpendicular to each of the width of the laminate and the length of the laminate, the thickness being between approximately 0.8 mm and approximately 1.5 mm. In some of the present portable electronic device housings, the length of the laminate is between approximately 25 cm and approximately 35 cm. In some portable electronic device housings, the laminate is balanced. In some portable electronic device housings, the laminate is symmetric.

In some portable electronic device housings, in each of the outer sections, at least one of the laminae includes a first set of fibers that are aligned in the first direction and a second set of fibers that are aligned in the second direction, and the first set of fibers is woven with the second set of fibers. In some portable electronic device housings, in each of the outer sections, at least one of the lamina(e) including fibers aligned in the first direction is a unidirectional lamina, and at least one of the lamina(e) including fibers aligned in the second direction is a unidirectional laminate. In some portable electronic device housings, each of the laminae is a unidirectional lamina.

In some portable electronic device housings, no lamina outside of the inner section that accounts for at least 10% of a thickness of the laminate, measured perpendicularly to each of the width of the laminate and the length of the laminate, includes fibers aligned with the length of the laminate. In some portable electronic device housings, no lamina having fibers aligned with the width of the laminate is disposed closer to the front surface than is one of the laminae having fibers aligned in the first direction and/or in the second direction, and/or no lamina having fibers aligned with the width of the laminate is disposed closer to the back surface than is one of the laminae having fibers aligned in the first direction and/or the second direction.

In some laminates, one of the laminae including fibers aligned in the first direction and/or in the second direction defines at least a majority of the back face of the laminate, and/or one of the laminae including fibers aligned in the first direction and/or in the second direction defines at least a majority of the front face of the laminate.

Some of the present methods for making one of the present portable electric device housings comprises overmolding the thermoplastic body onto the laminate.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. A portable electronic device (PED) housing comprising:
a composite body including:
a laminate comprising laminae, each including fibers dispersed within a matrix material, the laminate defining:
a front face; and
a back face; and
a thermoplastic body coupled to the laminate along a periphery of the back face, the thermoplastic body covering more of the back face than the front face;
wherein the laminate comprises:
an inner section including one or more of the laminae, fibers of each of which are aligned with the length of the laminate, the length of the laminate being perpendicular to and at least 10% longer than a width of the laminate; and
first and second outer sections disposed on opposing sides of the inner section, each of the outer sections including two or more of the laminae:
one or more of which includes fibers aligned with the width of the laminate;
one or more of which includes fibers aligned in a first direction that is angularly disposed relative to the width of the laminate by a first angle of at least 10 degrees; and
one or more of which includes fibers aligned in a second direction that is angularly disposed relative to the width of the laminate by a second angle that is equal and opposite to the first angle.

2. The PED housing of claim 1, wherein, in each of the outer sections:
at least one of the laminae includes a first set of fibers that are aligned in the first direction and a second set of fibers that are aligned in the second direction; and
the first set of fibers is woven with the second set of fibers.

3. The PED housing of claim 1, wherein, in each of the outer sections:
at least one of the lamina(e) including fibers aligned in the first direction is a unidirectional lamina; and
at least one of the lamina(e) including fibers aligned in the second direction is a unidirectional lamina.

4. The PED housing of claim 3, wherein each of the laminae is a unidirectional lamina.

5. The PED housing of any of claims 1-4, wherein, in each of the outer sections, the first angle is approximately 45 degrees.

6. The PED housing of any of claims 1-5, wherein no lamina outside of the inner section that accounts for at least 10% of a thickness of the laminate, measured perpendicularly to each of the width of the laminate and the length of the laminate, includes fibers aligned with the length of the laminate.

7. The PED housing of any of claims 1-6, wherein:
no lamina having fibers aligned with the width of the laminate is disposed closer to the front surface than is one of the laminae having fibers aligned in the first direction and/or in the second direction; and/or
no lamina having fibers aligned with the width of the laminate is disposed closer to the back surface than is one of the laminae having fibers aligned in the first direction and/or in the second direction.

8. The PED housing of any of claims 1-7, wherein:
one of the laminae including fibers aligned in the first direction and/or in the second direction defines at least a majority of the back face of the laminate; and/or
one of the laminae including fibers aligned in the first direction and/or in the second direction defines at least a majority of the front face of the laminate.

9. The PED housing of any of claims 1-8, wherein the laminate is balanced.

10. The PED housing of any of claims 1-9, wherein the laminate is symmetric.

11. The PED housing of any of claims 1-10, wherein the laminate has a thickness that is perpendicular to each of the width of the laminate and the length of the laminate, the thickness being between approximately 0.8 millimeters (mm) and approximately 1.5 mm.

12. The PED housing of any of claims 1-11, wherein the length of the laminate is between approximately 25 centimeters (cm) and approximately 35 cm.

13. The PED housing of any of claims 1-12, wherein:
the laminate defines a planar portion of the composite body; and
the thermoplastic body defines a lip that extends outwardly from and surrounds at least a majority of the planar portion.

14. The PED housing of any of claims 1-13, wherein the thermoplastic body covers less than 5% of the front face of the laminate.

15. A method of making the PED housing of any of claims 1-14, comprising overmolding the thermoplastic body onto the laminate.
